# EUROPÄISCHE PATENTSCHRIFT

(11) **EP 4 468 026 B1**
(45) Veröffentlichungstag und Bekanntmachung des Hinweises auf die Patenterteilung: **14.05.2025**
(21) Anmeldenummer: 23175231.2
(22) Anmeldetag: 25.05.2023
(51) Int. Cl.: G01S 7/481, G01S 7/497, G01S 17/42

(54) **OPTOELEKTRONISCHER SENSOR UND VERFAHREN ZUR VERSCHMUTZUNGSMESSUNG EINER FRONTSCHEIBE**
OPTOELECTRONIC SENSOR AND METHOD FOR MEASURING SOILING OF A WINDSHIELD
CAPTEUR OPTOÉLECTRONIQUE ET PROCÉDÉ DE MESURE DE L'ENCRASSEMENT D'UNE VITRE FRONTALE

(43) Veröffentlichungstag der Anmeldung: 27.11.2024
(73) Patentinhaber: SICK AG, 79183 Waldkirch (DE)
(72) Erfinder: Huber, Gregor, 79110 Freiburg (DE); Dollmann, Thomas, 79183 Waldkirch (DE); Kufner, Martin, 79215 Elzach (DE); Marsden, Scott, 79108 Freiburg (DE); Magin, Alice, 79108 Freiburg (DE)

(56) Entgegenhaltungen:
- EP-A1- 3 392 679
- DE-A1- 19 706 612
- DE-B3- 102016 111 615

## Beschreibung

Die Erfindung betrifft einen optoelektronischen Sensor, insbesondere Laserscanner, zur Erfassung mindestens eines Objekts in einem Überwachungsbereich sowie ein Verfahren zur Verschmutzungsmessung einer Frontscheibe eines optoelektronischen Sensors nach dem Oberbegriff von Anspruch 1 beziehungsweise 13.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Um bei beschränkter Lichtpulsenergie die Reichweite zu steigern, senden einige herkömmliche Laserscanner je Abstandswert mehrere Lichtpulse aus und verrechnen die Ergebnisse dieser Einzelmessungen zu einem gemeinsamen Messwert. Ein derartiger Laserscanner mit Pulsmittelungsverfahren ist beispielsweise aus der DE 10 2010 061 382 A1 bekannt. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. In den meisten Laserscannern wird die Abtastbewegung durch einen Drehspiegel oder ein Polygonspiegelrad erreicht. Stattdessen rotiert in einigen Laserscannern wie etwa demjenigen nach DE 197 57 849 B4 der gesamten Messkopf mit Lichtsendern und Lichtempfängern. Während die meisten bekannten Laserscanner mit einem einzigen Abtaststrahl arbeiten und dementsprechend nur eine zentrale Abtastebene erfassen, gibt es auch Bestrebungen, durch eine Vielzahl von Abtaststrahlen einen Mehrebenenscanner zu realisieren. Das kann mit einem Pulsmittelungsverfahren kombiniert werden.

Laserscanner werden auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Ein Laserscanner wird oft in rauen Umgebungen eingesetzt, in denen er mit Staub, Schmutz, Wasser und ähnlichen Verunreinigungen in Berührung kommt. Das beeinträchtigt die Transmissionsfähigkeit einer Frontscheibe des Laserscanners und erhöht dort die Streuung. Der Laserscanner ist in der Regel so ausgelegt, dass dies bis zu einem gewissen Grad toleriert wird. Danach kommt es dann allerdings zu einem Reichweitenverlust oder zu Fehlmessungen mit womöglich schwerwiegenden Konsequenzen. Deshalb ist bekannt, die Transmissionsfähigkeit der Frontscheibe zu überwachen, was auch als Verschmutzungsmessung bezeichnet wird. Das ermöglicht bei Beeinträchtigungen entsprechende Warn- oder Fehlerzustände des Laserscanners. Für den Einsatz in der Sicherheitstechnik ist eine Frontscheibenüberwachung sogar unumgänglich.

Eine herkömmliche Lösung, die beispielsweise in der DE 43 45 446 C2 beschrieben wird, sieht eine Vielzahl unabhängiger optischer Testkanäle aus jeweiligen Sender-Empfängerpaaren vor, die über den gesamten Winkelbereich der Frontscheibe verteilt angeordnet sind. Dieses Prinzip findet weiterhin in vielen Laserscannern Anwendung. Da jeder Testkanal nur eine punktuelle Messung der Frontscheibe leisten kann, ist hierfür eine entsprechend hohe Anzahl von Bauteilen erforderlich. Zudem muss ein Partner des Sender-Empfängerpaares oder alternativ in reflexiver Anordnung zumindest ein Reflektor außerhalb der Frontscheibe angebracht werden. Wünschenswert wäre aber, dass die Frontscheibe das Gerät abschließt, zumal außenliegende Bauteile selbst einer Verschmutzung ausgesetzt sind.

Um die Vielzahl an Testkanälen zu vermeiden, ist eine sogenannte mitdrehende Verschmutzungsmessung möglich. Dabei bewegt sich ein Sender-Empfängerpaar mit der Ablenkeinheit oder dem Drehspiegel für die Scanbewegung mit und testet so sukzessive die Transmissionsfähigkeit der Frontscheibe. Dafür wird aber wiederum ein Reflektor außerhalb der Frontscheibe verwendet. Problematisch kann außerdem ein optisches Übersprechen auf das eigentliche Messsystem werden. Die EP 2 237 065 A1 offenbart einen derartigen Laserscanner, bei dem sich die komplette Messeinheit mit Lichtquelle und Detektor dreht. Auf dem entsprechenden Rotor sind außerdem eine Testlichtquelle und ein Testdetektor untergebracht, während außerhalb des Gehäuses ein Reflektorelement angeordnet ist. So tasten Testlichtquelle und Testdetektor die Frontscheibe im Laufe der Umdrehung mit Hilfe des Reflektorelements ab. Eine ähnliche Fensterscheibenüberwachung ist auch aus EP 2 388 619 A1 bekannt. In der EP 4 086 661 A1 werden ein Testlichtsender und ein Testlichtempfänger in der Nähe des Außenumfangs eines Rotors des rotierenden Messkopfes angeordnet, um die Frontscheibe mit von unten her zu durchstrahlen, wobei ein Reflektor an der Oberseite den Testlichtpfad vervollständigt.

Ein weiterer herkömmlicher Ansatz besteht darin, die Verschmutzungsmessung aus der eigentlichen Entfernungsmessung abzuleiten. Das austretende Messlicht verursacht einen internen Frontscheibenreflex, der üblicherweise als Störeffekt betrachtet und beispielsweise in eine optische Falle abgelenkt wird, jedoch prinzipiell eine Information über die optischen Eigenschaften der Frontscheibe in sich trägt. Eine Schwierigkeit besteht darin, dass damit nur der Austritts- nicht aber ein abweichender Eintrittsbereich der Frontscheibe geprüft wird. Außerdem kann die Messfunktion überladen und beeinträchtigt werden, etwa weil ein Teil der Messzeit beansprucht wird.

In der EP 3 078 985 A1 rotiert ein Reflektor relativ zu stationären Paaren von Testlichtsender und Testlichtempfänger. Damit kann jeweils pro Testkanal ein etwas breiterer Bereich der Frontscheibe geprüft werden, aber die Vielzahl an Testkanälen wird dadurch nicht vermieden. Ein ähnliches Konzept verwendet die EP 2 508 914 A1, nur dass hier der Reflektor an einem Sendetubus und nicht direkt am Drehspiegel angebracht ist. Die US 2008/0158555 A1 zeigt eine weitere Frontscheibenüberwachung über einen mitrotierenden Reflektor.

Die DE 100 25 511 C1 leitet Messstrahlung zur Verschmutzungsüberwachung eines Fensters eines Laserscanners über ihren Drehspiegel an die Unterseite des Fensters. Dort wird die Messstrahlung von einer sich über die Länge des Fensters erstreckenden Spiegelfläche zur Oberseite des Fensters umgeleitet, wo eine Reihe von Messempfängern angeordnet ist. Aufgrund einer gekrümmten Kontur des Fensters wird die Messstrahlung auf ihrem Weg von der Unterseite zu der Oberseite mehrfach durch das Fenster geführt. Das ist eine Art Hybrid aus mitdrehender Verschmutzungsmessung und einer Vielzahl von Testkanälen, die aber immer noch zahlreiche Bauteile benötigt. Die DE 197 06 612 A1 hat einen etwas anderen konstruktiven Aufbau, verfolgt aber das gleiche Prinzip. Die EP 3 511 739 A1 erweitert den Gedanken dahingehend, dass das Testlicht zum Prüfen der Frontscheibe in einen auf der Drehachse angeordneten Empfänger zurückgeführt wird, so dass effektiv eine mitdrehende Verschmutzungsmessung realisiert ist.

Aus der DE 10 2016 111 615 B3 ist ein Laserscanner bekannt, dessen Winkelmesseinheit auf einem mitrotierenden Bildsensor nach dem Prinzip eines Computermauschips basiert, der auf einen stationären Teil und insbesondere die Frontscheibe gerichtet ist und die Rotation über den optischen Fluss verfolgt. Als weitere Funktion können die Daten des Bildsensors ein weiteres Mal etwa im Hinblick auf Amplitude und Kontrast ausgewertet werden, um die Frontscheibe auf Verschmutzung zu überwachen.

In der EP 3 392 679 A1 wird ein Laserscanner beschrieben, der mit einer Testeinheit die Durchlässigkeit seiner Frontscheibe prüft. Die Testeinheit weist zwei Testvorrichtungen auf, wobei die erste Testvorrichtung einen mitdrehenden Testdetektor und in Umfangsrichtung verteilte Testsender und die zweite Testvorrichtung eine mitrotierende vertikale Anordnung mehrerer Lichttaster aufweist.

Es ist daher Aufgabe der Erfindung, die Frontscheibenüberwachung oder Verschmutzungsmessung weiter zu verbessern.

Diese Aufgabe wird durch einen optoelektronischen Sensor, insbesondere Laserscanner, zur Erfassung mindestens eines Objekts in einem Überwachungsbereich sowie ein Verfahren zur Verschmutzungsmessung einer Frontscheibe eines optoelektronischen Sensors nach Anspruch 1 beziehungsweise 13 gelöst. Der Sensor umfasst eine Messeinheit mit mindestens einem Messlichtsender und mindestens einem Messlichtempfänger, um Messlicht in den Überwachungsbereich auszusenden und von dort wieder zu empfangen, um eine Messempfangssignal zu erzeugen. In einem Gehäuse des Sensors ist eine Frontscheibe vorgesehen, um das Messlicht durchtreten zu lassen. Eine bewegliche Ablenkeinheit lenkt das Messlicht periodisch ab, sorgt somit für eine wiederholte Abtastung eines Teilbereichs des Überwachungsbereichs, beispielsweise einer Scanebene. Die bewegliche Ablenkeinheit ist vorzugsweise als beweglicher Messkopf mit der Messeinheit ausgebildet, alternativ kann aber auch ein Drehspiegel oder dergleichen eingesetzt sein.

Eine Verschmutzungsprüfeinheit wird mit der Ablenkeinheit mitbewegt, um die Frontscheibe auf Verschmutzungen zu prüfen. Die Verschmutzungsprüfeinheit weist mindestens zwei Verschmutzungsprüflichtsender und mindestens zwei Verschmutzungsprüflichtempfänger auf. Damit wird ein Verschmutzungsprüfempfangssignal aus an der Frontscheibe reflektiertem Verschmutzungsprüflicht erzeugt. Es wird somit ein Frontscheibenreflex gemessen, der ausgewertete Anteil des Verschmutzungsprüflichts durchdringt die Frontscheibe nicht beziehungsweise nur bis zu einer Verschmutzung auf der Außenseite. Messeinheit und Verschmutzungsprüfeinheit sind zunächst lediglich zusammenfassende Namen für die entsprechenden Funktionseinheiten, sie können aber auch als bauliche Module ausgebildet sein. Die entsprechenden Vorsilben sollen lediglich die Zugehörigkeit beispielsweise für die jeweiligen Lichtsender und Lichtempfänger unterscheidbar machen.

In einer Steuer- und Auswertungseinheit wird einerseits das Messempfangssignal ausgewertet, um das Objekt zu erfassen, also beispielsweise festzustellen, ob sich in der jeweiligen Abstrahlrichtung ein Objekt befindet und vorzugsweise dessen Abstand mit einem Lichtlaufzeitverfahren zu messen. Andererseits wird das Verschmutzungsprüfempfangssignal ausgewertet, um die Verschmutzung der Frontscheibe und damit zumindest mittelbar ihre Transmissionsfähigkeit zu bewerten.

Die Erfindung geht von dem Grundgedanken einer mehrkanaligen Verschmutzungsmessung aus. Mehrkanalig bedeutet, dass in der jeweiligen Stellung der Ablenkeinheit mehrere Verschmutzungsprüfempfangssignale gewonnen und ausgewertet werden. Dazu weist die Verschmutzungsprüfeinheit mindestens zwei Verschmutzungsprüflichtsender und/oder mindestens zwei Verschmutzungsprüflichtempfänger auf. Ein Verschmutzungsprüfkanal umfasst jeweils einen Verschmutzungsprüflichtsender und einen Verschmutzungsprüflichtempfänger, und durch Auswahl solcher Paare entstehen verschiedene Kombinationen und damit Lichtwege und Auftreffpunkte des Verschmutzungsprüflichts auf der Frontscheibe. Ein Verschmutzungsprüflichtsender beziehungsweise ein Verschmutzungsprüflichtempfänger kann mehrfach in verschiedenen Verschmutzungsprüfkanälen verwendet werden. Die Verschmutzungsprüfkanäle arbeiten vorzugsweise zeitversetzt. Die Abfolge kann angesichts der extrem kurzen Lichtwege sehr schnell gewechselt werden. Die mehreren Verschmutzungsprüfempfangssignale werden dann gemeinsam ausgewertet, um insgesamt zu einer Bewertung der Verschmutzung der Frontscheibe zu kommen.

Die Erfindung hat den Vorteil, dass eine lückenlose Überwachung der Frontscheibe in allen Stellungen der beweglichen Ablenkeinheit ermöglicht wird. Dabei wird der Durchtrittsbereich sowohl des austretenden als auch des eintretenden Messlichts vollständig prüfbar. In Bewegungsrichtung der Ablenkeinteilung können die zu prüfenden Abschnitte oder Segmente der Frontscheibe praktisch beliebig konfiguriert werden. Es sind nur wenige Bauteile erforderlich, so dass der Hardware- und Kostenaufwand gering bleibt. Die Frontscheibe kann die äußerste Gerätekante darstellen, außenliegende Komponenten für die Verschmutzungsmessung sind nicht erforderlich. Die Lichtwege von Messlicht und Verschmutzungsprüflicht können entkoppelt werden, so dass die Verschmutzungsmessung die eigentliche Messung nicht beeinflusst. Die erfindungsgemäße Auswertung ermöglicht zudem eine Unterscheidung zwischen nahen Objekten des Überwachungsbereichs und einer Verschmutzung der Frontscheibe, so dass Fehlauslösungen der Verschmutzungsprüfung abgefangen werden können.

Sofern der Sensor eine mit der Ablenkeinheit mitbewegte Messeinheit aufweist, ist ohnehin bereits eine Daten- und Energieübertragung in den beweglichen Teil des Sensors erforderlich, die von der Verschmutzungsmessung mit genutzt werden kann. Dann ist der zusätzliche Bauraumbedarf und Hardwareaufwand für die Verschmutzungsmessung besonders gering. Der Sensor kann mehrstrahlig ausgebildet sein, insbesondere als Mehrlagenscanner, um einen größeren Teil des Überwachungsbereichs zu erfassen. Dazu werden in der Messeinheit sendeseitig und/oder empfangsseitig mehrere Abtaststrahlen erzeugt, durch eine Vielzahl von Messlichtsendern und/oder Strahlauskopplungen beziehungsweise eine Vielzahl von Messlichtempfängern.

Eine Abstrahlrichtung des Verschmutzungsprüflicht steht vorzugsweise quer, insbesondere senkrecht zu einer Abstrahlrichtung des Messlichts. Durch unterschiedliche Orientierungen der eigentlichen Messung und der Verschmutzungsmessung wird ein optisches Übersprechen stark verringert oder ganz verhindert. Die Verschmutzungsmessung wirkt selbst ohne zeitliche Entkopplung nicht störend auf die eigentliche Messung.

Die Steuer- und Auswertungseinheit ist bevorzugt dafür ausgebildet, für die Bewertung der Transmissionsfähigkeit der Frontscheibe ein jeweiliges Verschmutzungsprüfempfangssignal mit einem Referenzwert zu vergleichen. Dieser Vergleich erfolgt vorzugsweise je Verschmutzungsprüfempfangssignal beziehungsweise Verschmutzungsprüfkanal. Der Referenzwert bildet die Bewertungsbasis beispielsweise einer neuen oder sauberen Frontscheibe.

Die Steuer- und Auswertungseinheit ist bevorzugt für einen Einlernmodus ausgebildet, in dem Verschmutzungsprüfempfangssignale als Referenzwerte abgespeichert werden. Erneut geschieht dies vorzugsweise je Verschmutzungsprüfempfangssignal beziehungsweise Verschmutzungsprüfkanal. Damit wird der Sensor auf einen Sollzustand kalibriert, sei es ab Werk oder beispielsweise mit einer neuen oder nach manueller Prüfung sauberen Frontscheibe. Der Einlernmodus kann für eine Rekalibrierung aufgerufen werden, beispielsweise auf Knopfdruck oder durch Anwählen einer entsprechenden Funktion in einer Konfigurationssoftware, etwa nachdem die Frontscheibe gewechselt oder gereinigt wurde.

Die Steuer- und Auswertungseinheit ist bevorzugt dafür ausgebildet, ein Verschmutzungsprüfempfangssignal bei inaktivem Verschmutzungsprüflichtsender zu messen, um es als Hintergrundsignal eines bei aktivem Verschmutzungsprüflichtsender erfassten Verschmutzungsprüfempfangssignals zu kompensieren. Damit wird eine Hintergrundausblendung realisiert, die den Einfluss des Umgebungslichts auf die Verschmutzungsmessung vermindert oder eliminiert. Die Hintergrundausblendung erfolgt vorzugsweise je Verschmutzungsprüfkanal, wobei es ausreicht, Verschmutzungsprüfsignale bei inaktivem Verschmutzungsprüflichtsender nur einmalig je Verschmutzungsprüflichtempfänger zu messen. Eine Hintergrundausblendung erfolgt bevorzugt für die Verschmutzungsprüfempfangssignale einer Verschmutzungsmessung im Betrieb und/oder für die Erfassung von Referenzwerten. Um dem dynamischen Verhalten des Sensors mit dessen bewegter Ablenkeinheit gerecht zu werden, erfolgen die beiden Messungen bei inaktivem und aktivem Verschmutzungsprüflichtsender vorzugsweise sehr kurz nacheinander und damit in einem unmittelbaren zeitlichen und räumlichen Zusammenhang. Sehr kurz nacheinander bedeutet, dass die Ablenkeinheit sich noch in praktisch der gleichen Winkelstellung befindet, wobei hier keine mathematische Präzision gefordert ist, sondern ein gleiches zu bewertendes Winkelsegment ausreicht.

Der Sensor weist bevorzugt einen Temperatursensor auf, wobei die Steuer- und Auswertungseinheit dafür ausgebildet ist, ein Verschmutzungsprüfempfangssignal oder einen Referenzwert anhand einer von dem Temperatursensor gemessenen Temperatur anzupassen. Damit erfolgt eine Temperaturkompensation der Verschmutzungsmessung. Es ist möglich, die Verschmutzungsprüfempfangssignale und/oder die Referenzwerte an die gemessene Temperatur anzupassen. Die Temperaturanpassung kann mit einer Rechenvorschrift, insbesondere einem einfachen linearen Temperaturfaktor, oder beispielsweise mittels einer Nachschlagtabelle (LUT, Lookup Table) erfolgen.

Der Sensor weist bevorzugt einen Temperaturreferenzkanal mit einem Temperaturreferenzlichtsender, einem Temperaturreferenzlichtempfänger und einem innerhalb des Gehäuses angeordneten internen Temperaturreferenzziel auf, um ein Verschmutzungsprüfempfangssignal oder einen Referenzwert anhand eines Temperaturreferenzsignals des Temperaturreferenzlichtempfängers anzupassen. Dadurch wird das Temperaturverhalten aus dem Temperaturreferenzkanal auf die Verschmutzungsmessung übertragen. Eine Temperaturmessung ist dann nicht mehr erforderlich, aber noch redundant möglich.

Die Verschmutzungsprüfeinheit weist erfindungsgemäß mindestens zwei Verschmutzungsprüflichtsender und mindestens zwei Verschmutzungslichtempfänger in einer abwechselnden linienförmigen Anordnung auf. Die Minimalkonfiguration eines Verschmutzungsprüflichtsenders und zweier Verschmutzungsprüflichtempfänger wird damit erweitert, um zusätzliche Verschmutzungsprüfkanäle zu schaffen. Die abwechselnde Anordnung kann in einem streng alternierenden Sinne ... ESESE... (S für Verschmutzungsprüflichtsender, E für Verschmutzungsprüflichtempfänger), aber auch in einem unregelmäßigeren Sinne wie EESEESEE, ESEESSEESE aufgefasst werden. Eine nicht linienförmige, also zweidimensionale Anordnung ist alternativ denkbar.

Die Anordnung ist bevorzugt schräg oder parallel zu einer Drehachse der beweglichen Ablenkeinheit angeordnet. Anschaulich steht damit die Anordnung der Verschmutzungsprüflichtsender und Verschmutzungsprüflichtempfänger senkrecht in dem Gerät, um übereinanderliegende Abschnitte der Frontscheibe zu prüfen. Eine gewisse Schräglage ist dabei zulässig, wenn dies beispielsweise bauliche Vorteile hat.

Die Verschmutzungsprüfkanäle weisen bevorzugt mindestens einen direkten Kanal auf, der von einem Verschmutzungsprüflichtsender und einem unmittelbar benachbarten Verschmutzungsprüflichtempfänger gebildet ist. Ein direkter Kanal wird somit von einem nebeneinanderliegenden Paar Verschmutzungsprüflichtsender und Verschmutzungsprüflichtempfänger aufgespannt. Das ermöglicht eine unmittelbare Prüfung des zugehörigen Auftrefforts auf der Frontscheibe mit den kürzesten Lichtwegen und steilsten Winkeln.

Die Verschmutzungsprüfkanäle weisen bevorzugt mindestens einen indirekten Kanal auf, der von einem Verschmutzungsprüflichtsender und einem nicht unmittelbar benachbarten Verschmutzungsprüflichtempfänger gebildet ist. Ein indirekter Kanal ist also ein Gegenstück zu einem direkten Kanal mit etwas längeren Lichtwegen und flacheren Winkeln. Besonders vorteilhaft ist eine Kombination mindestens eines direkten Kanals mit mindestens einem indirekten Kanal. Indirekte Kanäle eignen sich insbesondere zu einer Unterscheidung von Verschmutzung und einem nahen Objekt des Überwachungsbereichs, da nämlich letzteres in einem indirekten Kanal ein erheblich stärkeres Verschmutzungsprüfempfangssignal erzeugt.

Die Steuer- und Auswertungseinheit ist bevorzugt dafür ausgebildet, die Transmissionsfähigkeit der Frontscheibe in mehreren Winkelsegmenten entsprechend Stellungen des beweglichen Ablenkeinheit zu bewerten und insbesondere für mindestens ein konfigurierbares Winkelsegment die Transmissionsfähigkeit nicht zu bewerten. Die Verschmutzungsmessung wird damit auf Abschnitte der Frontscheibe bezogen. Das ermöglicht eine differenzierte Diagnose und beispielsweise einen Hinweis an den Benutzer, wo die Frontscheibe zu reinigen ist. Ferner können Winkelsegmente unterschiedlich behandelt werden, beispielsweise verunreinigte Winkelsegmente toleriert werden, wenn hier keine Messung erforderlich ist oder der entsprechende Abschnitt ohnehin verbaut und für das Messlicht blockiert ist.

Die Steuer- und Auswertungseinheit ist bevorzugt dafür ausgebildet, Messergebnisse der Messeinheit und der Verschmutzungsprüfeinheit miteinander zu vergleichen, insbesondere bei Erfassung eines Objekts durch die Messeinheit in dieser Stellung der Ablenkeinheit die Transmissionsfähigkeit der Frontscheibe nicht zu bewerten und/oder einen schnellen Anstieg der Verschmutzung als erfasstes Objekt zu behandeln. Solche Quervergleiche zwischen der eigentlichen Messung und der Verschmutzungsmessung können zu robusteren Ergebnissen führen und Fehlalarme der Verschmutzungsmessung vermeiden. Umgekehrt kann die Verschmutzungsmessung womöglich im extremen Nahbereich die eigentliche Messung unterstützen. Denn Verschmutzung ist ein langsamer Vorgang, so dass eine schnelle Änderung beispielsweise innerhalb einer oder weniger Perioden der Bewegung der Ablenkeinheit auf ein Objekt zurückgeführt werden kann. Es kann passieren, dass dann beispielsweise ein Regentropen oder ein Schlammspritzer auf der Frontscheibe statt als Verschmutzung als nahes Objekt behandelt wird, was aber zu dem richtigen Ergebnis führt, vorsichtshalber ein nahes Objekt anzunehmen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners mit mitdrehender Verschmutzungsmessung;
- Fig. 2: eine vereinfachte schematische Schnittdarstellung eines weiteren Laserscanners mit eine Drehspiegel statt einem drehenden Messkopf;
- Fig. 3: eine nochmals vereinfachte schematische Darstellung eines Laserscanners mit mitdrehender Verschmutzungsmessung von oben;
- Fig. 4: eine Darstellung einer Verschmutzungsprüfeinheit mit deren direkten Kanälen;
- Fig. 5: eine Darstellung der Verschmutzungsprüfeinheit gemäß Figur 4 nun mit deren indirekten Kanälen;
- Fig. 6: eine vergleichende Darstellung der Signale einer Verschmutzungsprüfeinheit bei einer Verschmutzung und bei einem nahen Objekt des Überwachungsbereichs in Abhängigkeit vom Abstand zwischen Verschmutzungsprüflichtsender und Verschmutzungsprüflichtempfänger; und
- Fig. 7: ein beispielhaftes Ablaufdiagramm einer Verschmutzungsmessung.

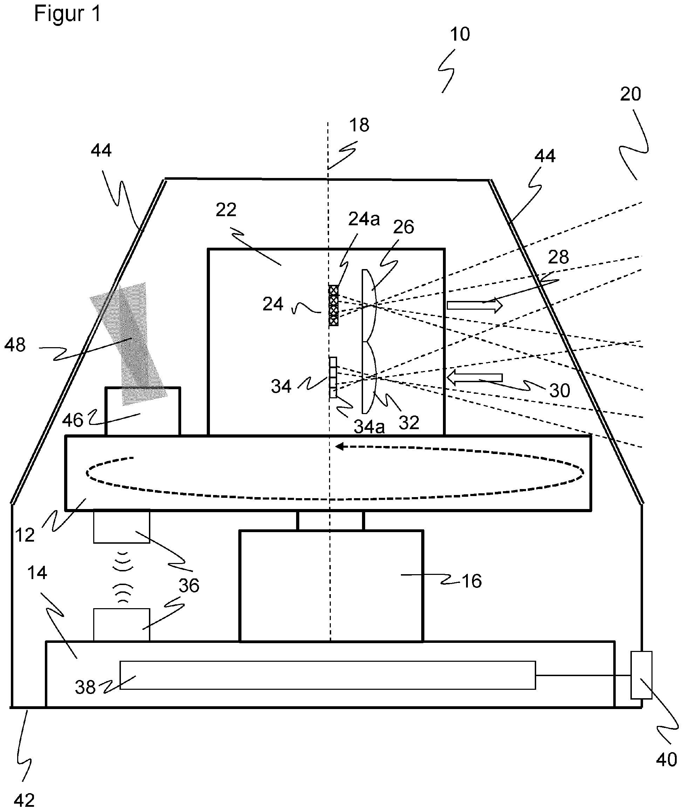

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Ablenkeinheit 12 und eine Sockeleinheit 14, die auch als Rotor und Stator aufgefasst werden können. Die Ablenkeinheit 12 trägt den optischen Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Ablenkeinheit 12 in eine Bewegung um eine Drehachse 18 versetzt, um so einen Überwachungsbereich 20 periodisch abzutasten.

Mit der Ablenkeinheit 12 wird eine Messeinheit 22 mitbewegt, in der ein Lichtsender 24 mit mehreren Lichtquellen 24a, beispielsweise LEDs oder Laser in Form von Kantenemittern oder VCSELs, mit Hilfe einer gemeinsamen Sendeoptik 26 mehrere Sendelichtstrahlen 28 erzeugt, die in den Überwachungsbereich 20 ausgesandt werden. Im dargestellten Beispiel sind es vier Sendelichtstrahlen 28 für vier Abtastebenen, es können mehr, auch deutlich mehr, und ebenso weniger Sendelichtstrahlen 28 sein. Anstelle einer gemeinsamen Sendeoptik 26 sind Einzeloptiken möglich. Die mehreren Sendelichtstrahlen 28 können auch dadurch entstehen, dass das Licht einer Lichtquelle oder einiger Lichtquellen durch ein Strahlteilerelement, ein diffraktives optisches Element oder dergleichen aufgeteilt wird.

Treffen die Sendelichtstrahlen 28 in dem Überwachungsbereich 20 auf ein Objekt, so kehren entsprechende remittierte Lichtstrahlen 30 zu dem Sensor 10 zurück. Die remittierten Lichtstrahlen 30 werden von einer gemeinsamen Empfangsoptik 32 auf einen Lichtempfänger 34 mit mehreren Lichtempfangselementen 34a geführt, die jeweils ein elektrisches Empfangssignal erzeugen. Die Lichtempfangselemente 34a können separate Bauteile oder Pixel einer integrierten Matrixanordnung sein, beispielsweise Photodioden, APDs (Avalanche Diode) oder SPADs (Single-Photon Avalanche Diode). Die Bemerkungen zur Sendeseite gelten sinngemäß auch hier. Es können insbesondere mehrere Einzeloptiken vorgesehen sein, und mehrere remittierte Lichtstrahlen 30 können auf einem gemeinsamen Lichtempfangselement erfasst werden.

Durch eine Abtastung mit mehreren Lichtstrahlen 28, 30 entsteht ein größerer Erfassungsbereich in Elevation, insbesondere ein Mehrlagenscanner. Alternativ kann nur eine Lichtquelle 24a beziehungsweise nur ein Lichtempfangselement 34a vorgesehen sein, um einen einstrahligen Sensor zu realisieren, insbesondere einen Laserscanner mit nur einer Scanebene. Auch der optische Grundaufbau mit biaxial nebeneinanderliegendem Lichtsender 24 und Lichtempfänger 34 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 36 verbindet die bewegliche Ablenkeinheit 12 mit der ruhenden Sockeleinheit 14. Dort befindet sich eine Steuer- und Auswertungseinheit 38 mit mindestens einer Recheneinheit. Beispiele hierfür sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen. Dank der berührungslosen Datenschnittstelle 36 kann die Steuer- und Auswertungseinheit 38 auch abweichend von der Darstellung teilweise oder vollständig in der beweglichen Ablenkeinheit 12 vorgesehen sein.

Die Steuer- und Auswertungseinheit 38 steuert den Lichtsender 24 und erhält die Empfangssignale des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Ablenkeinheit 12 bestimmt. Zur Auswertung wird die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene, sofern es mehrere Abtastebenen gibt, ist über die Identität des jeweiligen Lichtstrahls 28, 30 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 40 ausgegeben werden. Die Sensorschnittstelle 40 oder ein weiterer, nicht gezeigter Anschluss dienen umgekehrt als Parametrierschnittstelle. Der Sensor 10 kann als Sicherheitslaserscanner ausgebildet sein, wobei dann insbesondere die Steuer- und Auswertungseinheit 38 dafür ausgebildet ist, die Position erfasster Objekte mit Schutzfeldern zu vergleichen und bei Erkennung eines unzulässigen Schutzfeldeingriffs einen sicheren Ausgang mit einem Abschaltsignal anzusteuern.

Alle genannten Funktionskomponenten sind in einem Gehäuse 42 angeordnet, das im Bereich des Lichtaus- und Lichteintritts eine umlaufende Frontscheibe 44 aufweist. Die Frontscheibe 44 ist häufig, aber nicht zwingend als Rotationskörper ausgebildet und muss sich auch in beiden Fällen nicht unbedingt über 360° erstrecken, so dass dann ein gewisser Winkelbereich als Totzone verbleibt. Die dargestellte Frontscheibe 44 ist kegelstumpfförmig und steht daher schräg zu der optischen Achse der Messeinheit 22. Alternative Formen der Frontscheibe 44 mit beispielsweise einer kugel- oder kelchförmigen Kontur beziehungsweise Krümmung sind ebenfalls denkbar.

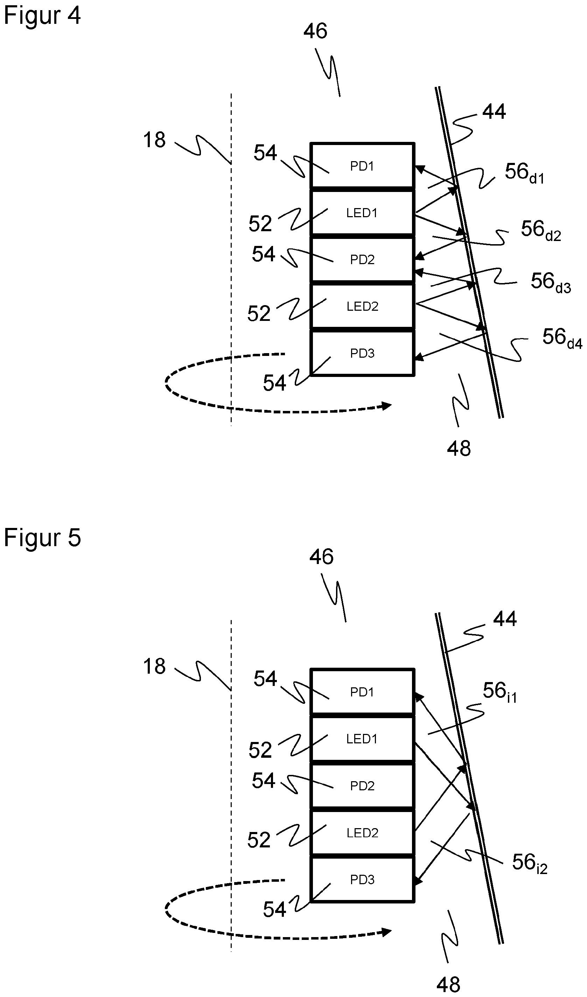

Mit der Ablenkeinheit 12 mitbewegt ist in dem Sensor 10 eine Verschmutzungsprüfeinheit 46 vorgesehen, die es ermöglicht, Verschmutzungen der Frontscheibe 44 zu erkennen und die später unter Bezugnahme auf die Figuren 4 bis 7 genauer erläutert wird. Die Verschmutzungsmessung basiert auf Rückstreuung von Verschmutzungsprüflicht 48 von der Frontscheibe 44 und ermöglicht eine großflächige vertikale Abtastung der Frontscheibe 44 und in Bewegungsrichtung der Ablenkeinheit 12 eine lückenlose Überwachung der Verschmutzung. Die Verschmutzungsprüfeinheit 46 kann wie dargestellt so angeordnet und ausgerichtet werden, dass sie die Messeinheit 22 weder optisch, mechanisch, elektrisch noch auf digitaler Ebene beeinflusst. Die Verschmutzungsprüfeinheit 46 wird über die berührungslose Versorgungs- und Datenschnittstelle 36 angebunden, so dass die Steuer- und Auswertungseinheit 38 auch für deren Ansteuerung und Auswertung zuständig ist.

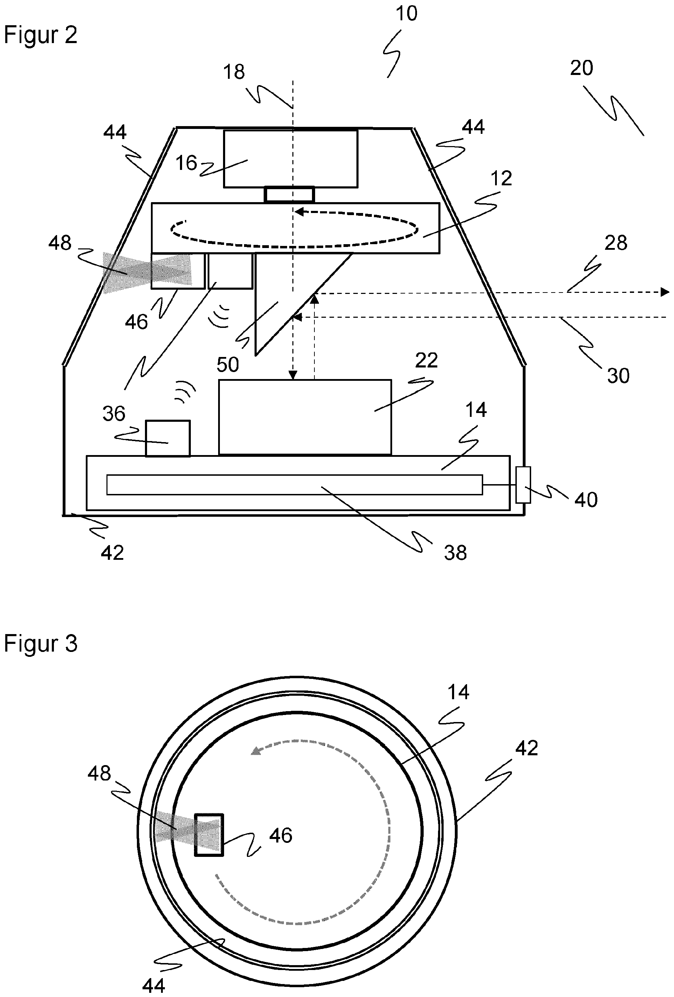

Figur 2 zeigt eine vereinfachte schematische Schnittdarstellung einer weiteren Ausführungsform des Sensors 10. Die Messeinheit 22 befindet sich hier in der Sockeleinheit 14 und vollzieht daher die Bewegung der Ablenkeinheit 12 nicht mit. Die periodische Abtastung wird stattdessen mit Hilfe eines Drehspiegels 50 umgesetzt, der mit der Ablenkeinheit 12 rotiert. Die Verschmutzungsprüfeinheit 46 ist weiterhin mit der Ablenkeinheit 12 mitbewegt angeordnet und daher an die berührungslose Versorgungs- und Datenschnittstelle 36 angebunden. Die Strahlrichtung des Verschmutzungsprüflichts 48 ist hier eine andere als in Figur 1, was lediglich illustrieren soll, dass in dieser Hinsicht in allen Ausführungsformen des Sensors 10 Variationen möglich sind. Wichtig ist, dass das Verschmutzungsprüflicht 48 tatsächlich einen Bereich der Frontscheibe 44 testet, den auch die Lichtstrahlen 28, 30 der Messeinheit 22 nutzen, wobei in Bewegungsrichtung der Ablenkeinheit 12 ein Winkel- und daraus resultierender Zeitversatz zulässig ist.

Figur 3 zeigt eine nochmals vereinfachte schematische Darstellung des Sensors 10 von oben, um die grundsätzliche Anordnung weiter zu veranschaulichen. Figur 3 kann als Draufsicht auf sowohl den Sensor 10 gemäß Figur 1 als auch den Sensor 10 gemäß Figur 2 aufgefasst werden. Im Zuge der Bewegung der Ablenkeinheit 12 erreicht die Verschmutzungsprüfeinheit 46 beziehungsweise deren Verschmutzungsprüflicht 48 jede Winkelposition, wodurch eine lückenlose Überwachung der Frontscheibe 44 möglich wird. Für die Auswertung der Verschmutzungsmessung kann die Frontscheibe 44 in eine beliebige Anzahl von Winkelbereichen oder Segmenten eingeteilt werden. Grenzen setzten hier lediglich die erforderlichen Mess- und Verarbeitungszeiten, die keine beliebig feinkörnige Unterteilung zulassen. Eine Unterteilung in Segmente erlaubt es beispielsweise, ausgewählte Segmente aus der Überwachung auszuschließen, wenn beispielsweise der Sensor 10 ohnehin derart verbaut ist, dass nur ein Teil der Frontscheibe 44 noch zugänglich ist. Da Verschmutzung in der Regel ein langsamer Prozess ist, kann eine Messung auf mehrere Perioden der Bewegung der Ablenkeinheit 12 ausgedehnt beziehungsweise darüber kumuliert, beispielsweise gemittelt werden. Das ermöglicht es, die Anzahl Segmente weiter zu erhöhen.

Figur 4 zeigt eine Darstellung der Verschmutzungsprüfeinheit 46. Sie weist Lichtsender 52 und Lichtempfänger 54, die teilweise als Verschmutzungslichtsender und Verschmutzungslichtempfänger bezeichnet werden, um sie von dem Lichtsender 24 und dem Lichtempfänger 34 der Messeinheit 22 zu unterscheiden, die aus dem gleichen Grund Messlichtsender und Messlichtempfänger genannt werden können. Die Lichtsender 52 und Lichtempfänger 54 können verschiedene Paare bilden und mit dem jeweils ausgesandten und nach Reflexion an der Frontscheibe 44 wieder empfangenen Verschmutzungsprüflicht 48 ein jeweiliges Verschmutzungsprüfempfangssignal erzeugen. Die jeweiligen Paare werden Kanäle genannt. In Figur 4 sind jeweils Paare aus unmittelbar benachbarten Lichtsendern 52 und Lichtempfängern 54 gebildet. Dies wird als direkter Kanal bezeichnet.

Um mehrere Kanäle bilden zu können, muss erfindungsgemäß zumindest mehr als ein Lichtsender 52 und mehr als ein Lichtempfänger 54 vorgesehen sein. Dargestellt ist beispielhaft eine Ausführungsform mit zwei Lichtsendern 52 (S) und drei Lichtempfängern 54 (E) in abwechselnder Abfolge ESESE. Damit können die dargestellten vier direkten Kanäle 56_{d1}-56_{d4} gebildet werden. Es sind andere Anzahlen und andere Abfolgen denkbar, beispielsweise ESEESE und viele weitere. Anstelle einer Anordnung vertikal übereinander wäre auch eine schräge Anordnung denkbar, wenn dies beispielsweise Vorteile hinsichtlich der Bauraumnutzung oder Wärmeabfuhr oder für eine spezifische Frontscheibengeometrie etwa als gekrümmte Freiformfläche verspricht. Allerdings sollte vorzugsweise darauf geachtet werden, dass der Abstand zwischen den Lichtsendern 52 beziehungsweise Lichtempfängern 54 und der Frontscheibe 44 möglichst klein und während der Bewegung der Ablenkeinheit 12 konstant bleibt.

Die Lichtsender 52 haben vorzugsweise einen breiten Abstrahlwinkel und einen nichttransparenten Sockel beziehungsweise eine seitliche Abschirmung wie einen lichtdichten Ring, um seitliches Streulicht insbesondere direkt in die Lichtempfänger 54 zu verhindern, da dies einen störenden Signalanteil erzeugen würde. Für die Lichtempfänger 54 ist ein großer Empfangswinkel von Vorteil, um möglichst viel zurückgestreutes Verschmutzungsprüflicht 48 detektieren zu können.

Figur 5 zeigt eine Darstellung ähnlich Figur 4 nun jedoch mit indirekten Kanälen 56ᵢ₁-56ᵢ₂, die jeweils nicht unmittelbar benachbarte Lichtsender 52 und Lichtempfänger 54 miteinander kombinieren. Der Bauteilabstand zwischen Lichtsender 52 und Lichtempfänger 54 in einem indirekten Kanal ist daher größer als in einem direkten Kanal und variiert je nach Anordnung auch zwischen den indirekten Kanälen. Dadurch lassen sich zusätzliche Informationen gewinnen, die eine verbesserte Beurteilung des Verschmutzungszustands der Frontscheibe 44 ermöglichen. Insbesondere ermöglichen die indirekten Kanäle eine Unterscheidung zwischen einer Verschmutzung und einem nahen Objekt im Überwachungsbereich 20.

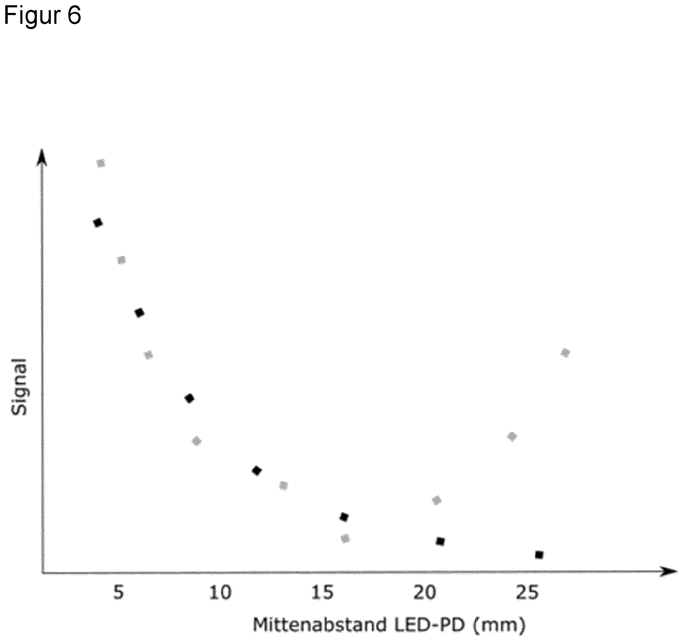

Dazu zeigt Figur 6 zeigt eine vergleichende Darstellung der Signale einer Verschmutzungsprüfeinheit bei einer Verschmutzung und bei einem nahen Objekt des Überwachungsbereichs 20 in Abhängigkeit vom Abstand zwischen Lichtsender 52 und Lichtempfänger 54 eines Kanals. Die dunklen Punkte sind für das Signal von dem nahen Objekt, die hellen Punkte für das Signal von einer verschmutzten Frontscheibe 44 gemessen. Für kleine Abstände zwischen Lichtsender 52 und Lichtempfänger 54 ergibt sich kein auffälliger Unterschied. Für größere Abstände, in Figur 6 beispielhaft oberhalb von etwa 20 mm, gehen die Werte jedoch deutlich auseinander. Ein nahes Objekt liefert hier ein deutlich höheres Signal als eine Verschmutzung, und somit kann zwischen diesen beiden Fällen unterschieden werden.

Direkte Kanäle weisen einen kleineren Abstand zwischen Lichtsender 52 und Lichtempfänger 54 auf, indirekte Kanäle einen größeren Abstand entsprechend dem rechten Teil der Figur 6. Somit ergibt sich bei einer Verschmutzung der Frontscheibe 44 in den direkten Kanälen ein starkes Signal, während die indirekten Kanäle aufgrund der flachen Einfallswinkel auf die Frontscheibe 44 nur ein sehr schwaches Signal zeigen. Bei einem nahen Objekt hingegen zeigen alle Kanäle starke Signale. Die indirekten Kanäle machen somit den Unterschied im rechten Teil der Figur 6 zugänglich und erlauben eine Unterscheidung zwischen einem nahen Objekt und einer Verschmutzung.

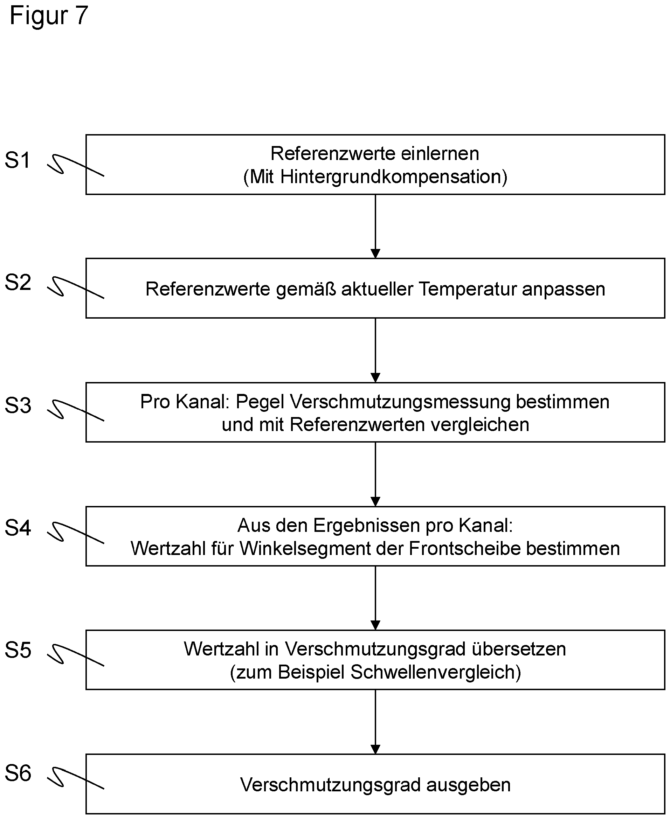

Figur 7 zeigt ein beispielhaftes Ablaufdiagramm einer Verschmutzungsmessung. In einem Schritt S1 werden Referenzwerte eingelernt. Das sind Signalpegel der später im Betrieb zu verwendenden Kanäle in einem spezifizierten Zustand der Frontscheibe 44, beispielsweise ab Werk oder wenn die Frontscheibe 44 gereinigt oder ersetzt wurde. Die Referenzwerte können demnach als Sollwerte für eine ausreichend saubere Frontscheibe 44 angesehen werden.

Bei der Bestimmung von Referenzwerten ebenso wie später im Betrieb bei der Messung von Verschmutzungsprüfempfangssignalen erfolgt vorzugsweise eine Hintergrundausblendung. Dazu wird beispielsweise in dem jeweiligen Kanal einmal mit aktivem Lichtsender 52 und einmal mit inaktivem Lichtsender 52 gemessen und die Differenz gebildet. Die digitale Unterdrückung des Hintergrunds mit einer Hintergrundmessung bei inaktivem Lichtsender 52 kann durch einen elektrischen Hochpassfilter ergänzt werden.

In einem Schritt S2 erfolgt eine Temperaturkompensation. Damit wird die Temperaturabhängigkeit des Verhaltens der Lichtsender 52 und Lichtempfänger 54 wenigstens teilweise ausgeglichen. Gemäß dem Ablauf der Figur 7 werden die Referenzwerte an eine aktuell gemessene Temperatur angepasst. Stattdessen könnten die gemessenen Verschmutzungsprüfempfangssignale angepasst werden. Die Temperaturanpassung kann einfach sein, beispielsweise eine empirische Temperaturkonstante mit der Temperaturdifferenz zwischen aktueller Temperatur und einer Bezugstemperatur multiplizieren und diesen Temperaturanteil zu den Referenzwerten addieren. Alternativ sind kompliziertere Rechenvorschriften oder eine Nachschlagtabelle vorstellbar.

In einem Schritt S3 wird für jeden zu beteiligenden Kanal ein Verschmutzungsprüfempfangssignal gemessen. Auch hier erfolgt vorzugsweise die schon angesprochene Hintergrundkompensation mit einer weiteren Messung bei inaktivem Lichtsender 52. Optional werden Kanäle von der weiteren Auswertung ausgeschlossen, in denen bereits das Hintergrundlicht allein einen hohen Signalpegel erzeugt, weil dann nicht zu erwarten ist, dass selbst im Falle einer Verschmutzung ein relevantes Verschmutzungsprüfempfangssignal erzeugt werden kann. Das jeweilige, vorzugsweise hintergrundkompensierte Verschmutzungsprüfempfangssignal wird mit dem zugehörigen Referenzwert des Kanals verglichen, beispielsweise ein Quotient gebildet.

Die Messungen in den Kanälen erfolgen vorzugsweise zeitversetzt, um ein Übersprechen zu vermeiden beziehungsweise weil Lichtsender 52 und Lichtempfänger 54 in mehreren Kanälen beteiligt sind. Eine Einzelmessung, in der beispielsweise der Lichtsender 52 eines Kanals gepulst und der zugehörige Lichtempfänger 54 ausgelesen wird, ist aber sehr kurz, so dass keine übermäßigen Anforderungen an den zeitlichen Ablauf gestellt werden müssen. Insbesondere ist die zeitliche Reihenfolge der Kanäle beliebig. Alle Kanäle sollten lediglich noch im gleichen Winkelsegment messen, wodurch die kleinste Körnung der Winkelsegmente eine gewisse untere Grenze aufweist.

In einem Schritt S4 werden die Ergebnisse aus den einzelnen Kanälen zusammengefasst, um eine gemeinsame Wertzahl für das jeweilige Winkelsegment zu gewinnen. Beispielsweise wird der höchste Signalpegel unter den direkten Kanälen als Wertzahl verwendet, um die Verschmutzung vorsorglich eher zu überschätzen, oder eine sonstige Verrechnung, wie ein Mittelwert, ein Quantil oder dergleichen. Optional werden einige Ausnahmen abgefangen. Ist beispielsweise der Signalpegel in den indirekten Kanälen zu hoch, so wird ein nahes Objekt vermutet, und deshalb ist in diesem Moment für dieses Winkelsegment keine Verschmutzungsmessung möglich. Es können auch insgesamt zu viele Kanäle wegen zu viel Hintergrundlicht ungültig sein, beispielsweise weniger als zwei direkte Kanäle überhaupt ein sinnvolles Verschmutzungsprüfempfangssignal beigetragen haben. Auch dann ist in diesem Moment für dieses Winkelsegment keine Verschmutzungsmessung möglich.

In einem Schritt S5 wird die Wertzahl in einen Verschmutzungsgrad übersetzt. Dafür kann beispielsweise eine Schwelle vorgegeben sein, für eine binäre Entscheidung zwischen noch hinreichend transmissionsfähig und verschmutzt, oder mehrere Schwellen für einen differenzierteren Verschmutzungsgrad wie keine relevante Verschmutzung, noch funktionsfähig, aber drohender Ausfall und Messfähigkeit nicht mehr gewährleistet.

In einem Schritt S6 wird der Verschmutzungsgrad an dem Sensor 10 oder einem angeschlossenen Gerät ausgegeben oder angezeigt. Dies können Hinweise entsprechend dem Vorabsatz sein, eine beschreibende Ausgabe wie "Frontscheibe leicht/mäßig/stark verschmutzt" oder ein Warnhinweis. Welche Verschmutzungsgrade relevant sind und in welcher Form darauf zu reagieren ist, kann sich von Anwendung zu Anwendung unterscheiden, und deshalb ist auch eine Konfiguration vorstellbar, die den Schritt S5 einbeziehen kann.

In vorteilhafter Weiterbildung der Erfindung ist vorstellbar, Messungen der Messeinheit 22 in die Verschmutzungsmessung einzubeziehen oder umgekehrt. Beispielsweise kann eine Verschmutzungsmessung für ein Winkelsegment übersprungen werden, wenn die Messeinheit 22 dort ein nahes Objekt detektiert oder kurz zuvor detektiert hat. Umgekehrt kann eine schnelle Änderung des Verschmutzungsgrades ein Hinweis für die eigentliche Messung mit der Messeinheit 22 sein, dass ein nahes Objekt vorhanden sein müsste, da Verschmutzungen sich in der Regel langsam ansammeln und nicht plötzlich auftreten. Fälle einer raschen Verschmutzung, wie durch einen Schlammspritzer oder einen Regentropfen, sind hier nicht eindeutig zuzuordnen, aber auch faktisch nicht eindeutig als entweder nahes Objekt oder Verschmutzung einzuordnen. Hier könnte ein Zeitfaktor einbezogen werden. Ein persistent auftretendes nahes Objekt hat letztlich die gleiche beeinträchtigende Wirkung auf die weiteren Messungen wie eine Verschmutzung. Jedenfalls hat der Sensor 10 alles erforderliche Wissen, dass eine Messung in größeren Entfernungen in dem betroffenen Winkelsegment derzeit nicht möglich ist, so dass darauf angemessen reagiert werden kann.

In einigen Anwendungsfällen kann es sinnvoll sein, die Verschmutzungsmessung zu rekalibrieren, also insbesondere gemäß Schritt S1 die Referenzwerte neu einzulernen. Beispiele sind das Reinigen der Frontscheibe oder ein Austausch der Frontscheibe 44 durch ein Ersatzteil. Die Rekalibrierung kann durch ein Betätigungselement des Sensors 10 oder eine Konfigurationssoftware ausgelöst werden, und während des Einlernens sollte darauf geachtet werden, dass sich keine Objekte in der Nähe des Sensors 10 befinden.

## Patentansprüche

1. Optoelektronischer Sensor (10), insbesondere Laserscanner, zur Erfassung mindestens eines Objekts in einem Überwachungsbereich (20),
der ein Gehäuse (42) mit einer Frontscheibe (44),
eine Messeinheit (22) mit mindestens einem Messlichtsender (24) zum Aussenden von Messlicht (28) durch die Frontscheibe (44) und mindestens einem Messlichtempfänger (34) zum Erzeugen eines Messempfangssignals aus von dem Objekt remittiertem Messlicht (30),
eine bewegliche Ablenkeinheit (12, 50) zur periodischen Ablenkung des Messlichts (28, 30),
eine mit der Ablenkeinheit (12) mitbewegte Verschmutzungsprüfeinheit (46) mit mindestens zwei Verschmutzungsprüflichtsendern (52) zum Aussenden von Verschmutzungsprüflicht (48) auf die Frontscheibe (44) und mindestens zwei Verschmutzungsprüflichtempfängern (54) zum Erzeugen eines Verschmutzungsprüfempfangssignals aus an der Frontscheibe (44) reflektiertem Verschmutzungsprüflicht (48), wobei die Verschmutzungsprüflichtsender (52) und Verschmutzungsprüflichtempfänger (54) mehrere Verschmutzungsprüfkanäle (56) bilden,
sowie eine Steuer- und Auswertungseinheit (38) aufweist, die dafür ausgebildet ist, durch Auswerten des Messempfangssignals das Objekt zu erfassen und durch Auswertung der Verschmutzungsprüfempfangssignale der mehreren Verschmutzungsprüfkanäle (56) die Verschmutzung der Frontscheibe (44) zu bewerten,
**dadurch gekennzeichnet,**
**dass** die Verschmutzungsprüflichtsender (52) und Verschmutzungsprüflichtempfänger (54) eine abwechselnde linienförmige Anordnung bilden.

2. Sensor (10) nach Anspruch 1,
wobei eine Abstrahlrichtung des Verschmutzungsprüflichts (48) quer, insbesondere senkrecht zu einer Abstrahlrichtung des Messlichts (28, 30) steht.

3. Sensor (10) nach Anspruch 1 oder 2,
wobei die Steuer- und Auswertungseinheit (38) dafür ausgebildet ist, für die Bewertung der Verschmutzung der Frontscheibe (44) ein jeweiliges Verschmutzungsprüfempfangssignal mit einem Referenzwert zu vergleichen.

4. Sensor (10) nach Anspruch 3,
wobei die Steuer- und Auswertungseinheit (38) für einen Einlernmodus ausgebildet ist, in dem Verschmutzungsprüfempfangssignale als Referenzwerte abgespeichert werden.

5. Sensor (10) nach einem der vorhergehenden Ansprüche,
wobei die Steuer- und Auswertungseinheit (38) dafür ausgebildet ist, ein Verschmutzungsprüfempfangssignal bei inaktivem Verschmutzungsprüflichtsender (52) zu messen, um es als Hintergrundsignal eines bei aktivem Verschmutzungsprüflichtsender (52) erfassten Verschmutzungsprüfempfangssignals zu kompensieren.

6. Sensor (10) nach einem der vorhergehenden Ansprüche,
der einen Temperatursensor aufweist, und wobei die Steuer- und Auswertungseinheit (38) dafür ausgebildet ist, ein Verschmutzungsprüfempfangssignal oder einen Referenzwert anhand einer von dem Temperatursensor gemessenen Temperatur anzupassen.

7. Sensor (10) nach einem der vorhergehenden Ansprüche,
der einen Temperaturreferenzkanal mit einem Temperaturreferenzlichtsender, einem Temperaturreferenzlichtempfänger und einem innerhalb des Gehäuses (52) angeordneten internen Temperaturreferenzziel aufweist, um ein Verschmutzungsprüfempfangssignal oder einen Referenzwert anhand eines Temperaturreferenzsignals des Temperaturreferenzlichtempfängers anzupassen.

8. Sensor (10) nach einem der vorhergehenden Ansprüche,
wobei die linienförmige Anordnung schräg oder parallel zu einer Drehachse (18) der beweglichen Ablenkeinheit (12, 50) angeordnet ist.

9. Sensor (10) nach einem der vorhergehenden Ansprüche,
wobei die Verschmutzungsprüfkanäle (56) mindestens einen direkten Kanal (56_{d1}-56_{d4}) aufweisen, der von einem Verschmutzungsprüflichtsender (52) und einem unmittelbar benachbarten Verschmutzungsprüflichtempfänger (54) gebildet ist.

10. Sensor (10) nach einem der vorhergehenden Ansprüche,
wobei die Verschmutzungsprüfkanäle (56) mindestens einen indirekten Kanal (56ᵢ₁-56ᵢ₂) aufweisen, der von einem Verschmutzungsprüflichtsender (52) und einem nicht unmittelbar benachbarten Verschmutzungsprüflichtempfänger (54) gebildet ist.

11. Sensor (10) nach einem der vorhergehenden Ansprüche,
wobei die Steuer- und Auswertungseinheit (38) dafür ausgebildet ist, die Verschmutzung der Frontscheibe (44) in mehreren Winkelsegmenten entsprechend Stellungen der beweglichen Ablenkeinheit (12) zu bewerten und insbesondere für mindestens ein konfigurierbares Winkelsegment die Verschmutzung nicht zu bewerten.

12. Sensor (10) nach einem der vorhergehenden Ansprüche,
wobei die Steuer- und Auswertungseinheit (38) dafür ausgebildet ist, Messergebnisse der Messeinheit (22) und der Verschmutzungsprüfeinheit (46) miteinander zu vergleichen, insbesondere bei Erfassung eines Objekts durch die Messeinheit (22) in dieser Stellung der Ablenkeinheit (12) die Verschmutzung der Frontscheibe (44) nicht zu bewerten und/oder einen schnellen Anstieg der Verschmutzung der Frontscheibe (44) als erfasstes Objekt zu behandeln.

13. Verfahren zur Verschmutzungsmessung einer Frontscheibe (44) eines optoelektronischen Sensors (10),
der mit mindestens einem Messlichtsender (24) Messlicht (28) durch die Frontscheibe (44) aussendet und mit mindestens einem Messlichtempfänger (34) aus von dem Objekt remittiertem Messlicht (30) ein Messempfangssignal erzeugt,
das Messlicht (28, 30) mit einer beweglichen Ablenkeinheit (12) periodisch ablenkt,
mit mindestens zwei mit der Ablenkeinheit (12) mitbewegten Verschmutzungsprüflichtsendern (52) Verschmutzungsprüflicht (48) auf die Frontscheibe (44) aussendet und mit mindestens zwei Verschmutzungsprüflichtempfängern (54) aus an der Frontscheibe (44) reflektiertem Verschmutzungsprüflicht (48) ein Verschmutzungsprüfempfangssignal erzeugt, wobei die Verschmutzungsprüflichtsender (52) und Verschmutzungsprüflichtempfänger (54) mehrere Verschmutzungsprüfkanäle (56) bilden,
das Objekt durch Auswerten des Messempfangssignals erfasst wird und die Verschmutzung der Frontscheibe (44) durch Auswertung der Verschmutzungsprüfempfangssignale der mehreren Verschmutzungsprüfkanäle (56) bewertet wird,
**dadurch gekennzeichnet,**
**dass** die Verschmutzungsprüflichtsender (52) und Verschmutzungsprüflichtempfänger (54) eine abwechselnde linienförmige Anordnung bilden.

## Claims

1. An optoelectronic sensor (10), in particular a laser scanner, for the detection of at least one object in a monitored zone (20),
comprising a housing (42) having a front screen (44);
a measuring unit (22) having at least one measurement light transmitter (24) for transmitting measurement light (28) through the front screen (44) and at least one measurement light receiver (34) for generating a received measurement signal from measurement light (30) remitted by the object;
a movable deflection unit (12, 50) for the periodic deflection of the measurement light (28, 30);
a contamination test unit (46) moved along with the deflection unit (12) and having at least two contamination test light transmitters (52) for transmitting contamination test light (48) onto the front screen (44) and at least two contamination test light receivers (54) for generating a received contamination test signal from contamination test light (48) remitted at the front screen (44); wherein the contamination test light transmitters (52) and the contamination test light receivers (54) form a plurality of contamination test channels (56); and a control and evaluation unit (38) that is configured to detect the object by evaluating the received measurement signal and to evaluate the contamination of the front screen (44) by evaluating the received contamination test signals of the plurality of contamination test channels (56);
**characterized in that**
the contamination test light transmitters (52) and the contamination test light receivers (54) form an alternating linear arrangement.

2. A sensor (10) in accordance with claim 1,
wherein a direction of radiation of the contamination test light (48) is transverse, in particular perpendicular, to a direction of radiation of the measurement light (28, 30).

3. A sensor (10) in accordance with claim 1 or claim 2,
wherein the control and evaluation (38) is configured to compare a respective received contamination test signal with a reference value for the evaluation of the contamination of the front screen (44).

4. A sensor (10) in accordance with claim 3,
wherein the control and evaluation unit (38) is configured for a teaching mode in which received contamination test signals are stored as reference values.

5. A sensor (10) in accordance with any one of the preceding claims,
wherein the control and evaluation unit (38) is configured to measure a received contamination test signal with an inactive contamination test light transmitter (52) to compensate it as a background signal of a received contamination test signal detected with an active contamination test light transmitter (52).

6. A sensor (10) in accordance with any one of the preceding claims,
that has a temperature sensor, and wherein the control and evaluation (38) is configured to adapt a received contamination test signal or a reference value using a temperature measured by the temperature sensor.

7. A sensor (10) in accordance with any one of the preceding claims,
that has a temperature reference channel having a temperature reference light transmitter, a temperature reference light receiver, and an internal temperature reference target arranged within the housing (52) to adapt a received contamination test signal or a reference value using a temperature reference signal of the temperature reference light receiver.

8. A sensor (10) in accordance with any one of the preceding claims,
wherein the linear arrangement is arranged slanted to or in parallel with an axis of rotation (18) of the movable deflection unit (12, 50).

9. A sensor (10) in accordance with any one of the preceding claims
wherein the contamination test channels (56) have at least one direct channel (56 _{d1} - 56_{d4}) that is formed by a contamination test light transmitter (52) and a directly adjacent contamination test light receiver (54).

10. A sensor (10) in accordance with any one of the preceding claims
wherein the contamination test channels (56) have at least one indirect channel (56ᵢ₁ - 56ᵢ₂) that is formed by a contamination test light transmitter (52) and a contamination test light receiver (54) not directly adjacent.

11. A sensor (10) in accordance with any one of the preceding claims
wherein the control and evaluation unit (38) is configured to evaluate the contamination of the front screen (44) in a plurality of angular segments corresponding to positions of the movable deflection unit (12) and in particular not to evaluate the contamination for at least one configurable angular segment.

12. A sensor (10) in accordance with any one of the preceding claims
wherein the control and evaluation unit (38) is configured to compare measured results of the measuring unit (22) and of the contamination test unit (46) with one another, in particular not to evaluate the contamination of the front screen (44) and/or to treat a fast increase in the contamination of the front screen (44) as a detected object on a detection of an object by the measuring unit (22) in this position of the deflection unit (12).

13. A method of measuring the contamination of a front screen (44) of an optoelectronic sensor (10)
that transmits measurement light (28) through the front screen (44) by at least two measurement light transmitters (24) and that generates a received measurement signal from measurement light (30) remitted by the object by at least one measurement light receiver (34);
that periodically deflects the measurement light (28, 30) by a movable deflection unit (11);
that transmits contamination test light (48) onto the front screen (44) by at least two contamination test light transmitters (52) moved along with the deflection unit (12) and that generates a received contamination test light signal from contamination test light (48) reflected at the front screen (44) by at least two contamination test light receivers (54); wherein the contamination test light transmitters (52) and the contamination test light receivers (54) for a plurality of contamination test channels (56),
the object is detected by evaluating the received measurement signal;
and the contamination of the front screen (44) is evaluated by evaluating the received contamination test signals of the plurality of contamination test channels (56),
**characterized in that**
the contamination test light transmitters (52) and the contamination test light receivers (54) form an alternating linear arrangement.

## Revendications

1. Capteur optoélectronique (10), en particulier scanner laser, pour détecter au moins un objet dans une zone à surveiller (20),
comprenant
un boîtier (42) muni d'une vitre frontale (44),
une unité de mesure (22) comprenant au moins un émetteur de lumière de mesure (24), destiné à émettre une lumière de mesure (28) à travers la vitre frontale (44), et au moins un récepteur de lumière de mesure (34), destiné à générer un signal de réception de mesure à partir de la lumière de mesure (30) renvoyée par l'objet,
une unité de déviation mobile (12, 50) destinée à dévier périodiquement la lumière de mesure (28, 30),
une unité de contrôle d'encrassement (46) qui se déplace avec l'unité de déviation (12) et qui comprend au moins deux émetteurs de lumière de contrôle d'encrassement (52), destinés à émettre une lumière de contrôle d'encrassement (48) vers la vitre frontale (44), et au moins deux récepteurs de lumière de contrôle d'encrassement (54), destinés à générer un signal de réception de contrôle d'encrassement à partir de la lumière de contrôle d'encrassement (48) réfléchie par la vitre frontale (44), les émetteurs de lumière de contrôle d'encrassement (52) et les récepteurs de lumière de contrôle d'encrassement (54) formant plusieurs canaux de contrôle d'encrassement (56),
ainsi qu'une unité de commande et d'évaluation (38) conçue pour détecter l'objet en évaluant le signal de réception de mesure et pour évaluer l'encrassement de la vitre frontale (44) en évaluant les signaux de réception de contrôle d'encrassement desdits plusieurs canaux de contrôle d'encrassement (56),
**caractérisé en ce que**
les émetteurs de lumière de contrôle d'encrassement (52) et les récepteurs de lumière de contrôle d'encrassement (54) constituent un agencement linéaire alterné.

2. Capteur (10) selon la revendication 1,
dans lequel une direction d'émission de la lumière de contrôle d'encrassement (48) est transversale, en particulier perpendiculaire à une direction d'émission de la lumière de mesure (28, 30).

3. Capteur (10) selon la revendication 1 ou 2,
dans lequel l'unité de commande et d'évaluation (38) est conçue pour comparer un signal de réception de contrôle d'encrassement respectif avec une valeur de référence, afin d'évaluer l'encrassement de la vitre frontale (44).

4. Capteur (10) selon la revendication 3,
dans lequel l'unité de commande et d'évaluation (38) est conçue pour un mode d'apprentissage dans lequel les signaux de réception de contrôle d'encrassement sont mémorisés en tant que valeurs de référence.

5. Capteur (10) selon l'une des revendications précédentes,
dans lequel l'unité de commande et d'évaluation (38) est conçue pour mesurer un signal de réception de contrôle d'encrassement lorsque l'émetteur de lumière de contrôle d'encrassement (52) est inactif, afin de le compenser en tant que signal de fond d'un signal de réception de contrôle d'encrassement acquis, lorsque l'émetteur de lumière de contrôle d'encrassement (52) est actif.

6. Capteur (10) selon l'une des revendications précédentes,
comprenant un capteur de température, l'unité de commande et d'évaluation (38) étant conçue pour adapter un signal de réception de contrôle d'encrassement ou une valeur de référence à l'aide d'une température mesurée par le capteur de température.

7. Capteur (10) selon l'une des revendications précédentes,
comprenant un canal de référence de température ayant un émetteur de lumière de référence de température, un récepteur de lumière de référence de température et une cible de référence de température interne disposée à l'intérieur du boîtier (52), afin d'adapter un signal de réception de contrôle d'encrassement ou une valeur de référence à l'aide d'un signal de référence de température du récepteur de lumière de référence de température.

8. Capteur (10) selon l'une des revendications précédentes,
dans lequel l'agencement linéaire est disposé obliquement ou parallèlement à un axe de rotation (18) de l'unité de déviation mobile (12, 50).

9. Capteur (10) selon l'une des revendications précédentes,
dans lequel les canaux de contrôle d'encrassement (56) comprennent au moins un canal direct (56_{d1} - 56_{d4}) formé par un émetteur de lumière de contrôle d'encrassement (52) et par un récepteur de lumière de contrôle d'encrassement (54) directement adjacent.

10. Capteur (10) selon l'une des revendications précédentes,
dans lequel les canaux de contrôle d'encrassement (56) comprennent au moins un canal indirect (56ᵢ₁ - 56ᵢ₂) formé par un émetteur de lumière de contrôle d'encrassement (52) et par un récepteur de lumière de contrôle d'encrassement (54) non directement adjacent.

11. Capteur (10) selon l'une des revendications précédentes,
dans lequel l'unité de commande et d'évaluation (38) est conçue pour évaluer l'encrassement de la vitre frontale (44) dans plusieurs segments angulaires, correspondant à des positions de l'unité de déviation mobile (12), et en particulier pour ne pas évaluer l'encrassement pour au moins un segment angulaire configurable.

12. Capteur (10) selon l'une des revendications précédentes,
dans lequel l'unité de commande et d'évaluation (38) est conçue pour comparer entre eux les résultats de mesure de l'unité de mesure (22) et de l'unité de contrôle d'encrassement (46), en particulier pour ne pas évaluer l'encrassement de la vitre frontale (44) en cas de détection d'un objet par l'unité de mesure (22) dans cette position de l'unité de déviation (12) et/ou pour traiter une augmentation rapide de l'encrassement de la vitre frontale (44) comme un objet détecté.

13. Procédé de mesure de l'encrassement d'une vitre frontale (44) d'un capteur optoélectronique (10),
qui émet une lumière de mesure (28) à travers la vitre frontale (44) au moyen d'au moins un émetteur de lumière de mesure (24) et qui génère un signal de réception de mesure à partir de la lumière de mesure (30), renvoyée par l'objet, au moyen d'au moins un récepteur de lumière de mesure (34),
qui fait dévier périodiquement la lumière de mesure (28, 30) au moyen d'une unité de déviation mobile (12),
qui émet une lumière de contrôle d'encrassement (48) vers la vitre frontale (44) au moyen d'au moins deux émetteurs de lumière de contrôle d'encrassement (52) déplacés avec l'unité de déviation (12), et qui génère un signal de réception de contrôle d'encrassement à partir de la lumière de contrôle d'encrassement (48), réfléchie par la vitre frontale (44), au moyen d'au moins deux récepteurs de lumière de contrôle d'encrassement (54), sachant que
les émetteurs de lumière de contrôle d'encrassement (52) et les récepteurs de lumière de contrôle d'encrassement (54) forment plusieurs canaux de contrôle d'encrassement (56),
l'objet est détecté par évaluation du signal de réception de mesure, et l'encrassement de la vitre frontale (44) est évalué par évaluation du signal de réception de contrôle d'encrassement desdits plusieurs canaux de contrôle d'encrassement (56),
**caractérisé en ce que**
les émetteurs de lumière de contrôle d'encrassement (52) et les récepteurs de lumière de contrôle d'encrassement (54) constituent un agencement linéaire alterné.
